# EUROPEAN PATENT SPECIFICATION

(11) **EP 1 077 865 B1**
(45) Date of publication and mention of the grant of the patent: **02.07.2003**
(21) Application number: 99915965.0
(22) Date of filing: 16.04.1999
(51) Int. Cl.: B62D 31/00

(54) **CITY-CAR**
STADTAUTO
VOITURE URBAINE

(30) Priority: 20.04.1998 IT MI980828
(43) Date of publication of application: 28.02.2001
(73) Proprietor: Ceccotti, Antonio, 56100 Pisa (IT)
(72) Inventor: Ceccotti, Antonio, 56100 Pisa (IT)
(74) Representative: Botti, Mario
(86) International application number: IB9900685
(87) International publication number: WO99054188

(56) References cited:
- EP-A- 0 547 583
- EP-A- 0 669 245
- EP-A- 0 829 417
- WO-A-96/05979
- FR-A- 2 383 817
- FR-A- 2 677 601
- FR-A- 2 716 858
- GB-A- 1 412 704
- US-A- 3 850 472
- "RENAULT ZOOM: DE NOUVELLES IDEES" REVUE AUTOMOBILE, vol. 88, no. 24, 10 June 1993 (1993-06-10), page 15 XP000377146 Berne,CH

## Description

This invention relates to a four-wheel city-car. In particular the invention relates to a four-wheel city-car of small overall dimension described in US-A-3 850 472, being of a type which comprises a structural frame covered by a car body, and a front seat and a rear seat aligned to each other along a longitudinal vehicle axis, whereby the rear seat is of a motorbike style and placed close against the front seat, to accomodate a passanger astride said longitudinal axis and whereby said rear seat is located at a higher level than the front seat.

As is known, the problem of an expanding street traffic in large cities and of controlling such a congested vehicular movement is a growing concern. Hence the need for new schemes of improving transportation and/or the utilization of parking space by the provision of cars which are small in size but retain the comfort features of latest generation cars.

The recent presentation to the general public of the SMART project, European Patent Application No. 0 669 245, as a joint undertaking of the car manufacturer Mercedes-Benz and the company SWATCH, attracted considerable interest. The above European application discloses a small two-seater car having its seats laid generally side-by-side but slightly offset from each other.

In the wake of this and other similar developments in the car industry, the proposals and designs for small city cars that could be used even by young people uneligible for a driving license have gained fresh impetus.

These small city cars are classed as "cycle cars" by the regulations on account of the limited power of their engine and of their small weight. However, they cannot attain high travel speeds, and although solving the problem of reduced space occupation by accomodating only two people, they are definitely inferior in comfort and overall performance. In fact, such cycle cars are unsuitable to move away from city traffic jams and to provide safe and comfortable travelling conditions on bypass roads or belt highways around the urban nuclei of big cities.

Furthermore, while these cycle cars do optimize the seating arrangement for two people side-by-side, they leave very little room between the occupants and the interior compartment walls. Thus, the living space is extremely reduced in case of serious crashes.

It will be appreciated from the above considerations that the solution currently provided by the state of the art to the problem of reducing the overall size of city cars is that of seating only two passengers side by side. But this can provide a major reduction in the lengthwise dimension only.

There have been prior proposals, however, for four-wheel vehicles which can accommodate two people seating one behind the other. For example, UK Patent No. 1 412 704 discloses a high-performance lightweight vehicle intended for young athletic drivers. In this vehicle, the two seats are laid in a tandem arrangement inside the cockpit.

The streamlined and lightweight character of such a vehicle rules it out, however, for city use.

US Patent No. 3,850,472 discloses a small size car comprising two structurally independent portions which are hinged together at the vehicle middle. This design allows the car to be essentially folded up such that one portion fits partway inside the other, thereby reducing the car parking space requirements, for example. Not even this solution suits the current trend in car design, since it fails to meet the requirements for car riding safety.

The underlying technical problem of this invention is to provide a city-car of an extremely compact size which can hold its own, both in terms of active and passive safety for its occupants, and of riding comfort, with the general standard in the car industry. This city-car should have such structural and functional features as to combine a small volume with an adequate propulsion and effective active and passive safety arrangements.

### Disclosure of Invention

The concept behind this invention is one of providing a four-wheel city-car having two seats laid one behind the other, so as to leave a sufficient living space between the occupants and the car body sidewalls, and having the general features of a motorbike, such that it is easily handled, practical to drive, and suitable for frequent use inside the city. Furthermore, in the city-car of this invention, the compartment accommodating the passenger is placed inside a cage- or basket-like structure and at a higher level than the driver's seat, so that the passenger can be adequately protected without depressing the driver's safety level.

Based on this concept, the technical problem is solved by a city-car for city use as defined in claim 1.

In addition, the rear seat is provided with a seat plate and a backrest, the backrest being hinge-mounted to one end of the seat plate.

Advantages of the city-car according to the invention will be apparent from the following description of an embodiment thereof, given by way of non-limitative example with reference to the accompanying drawings.

### Brief Description of Drawings

In the drawings:

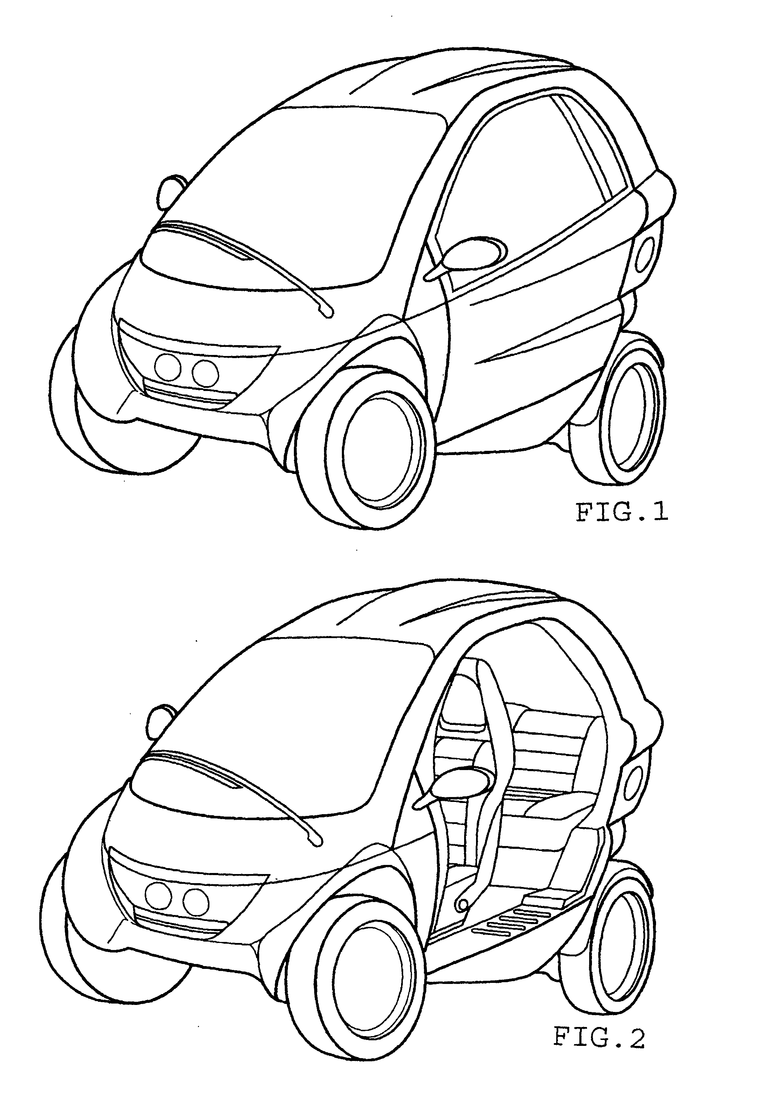

Figure 1 is a general view in perspective of a small size city car embodied in accordance with this invention;
Figure 1A is a schematic side view of the vehicle according to the invention;
Figure 2 is a perspetive view of the vehicle shown in Figure 1 in a possible condition of its use, with the doors removed;
Figure 2A is a perspective view showing schematically a structural frame of the city-car of Figure 1;
Figure 3 is a sectional view of the structural frame shown in Figure 2A as assembled in the city-car of this invention;
Figure 4 is a plan view of the construction of the structural frame of Figure 2A;
Figure 5 is a perspective view showing schematically a lower frame portion;

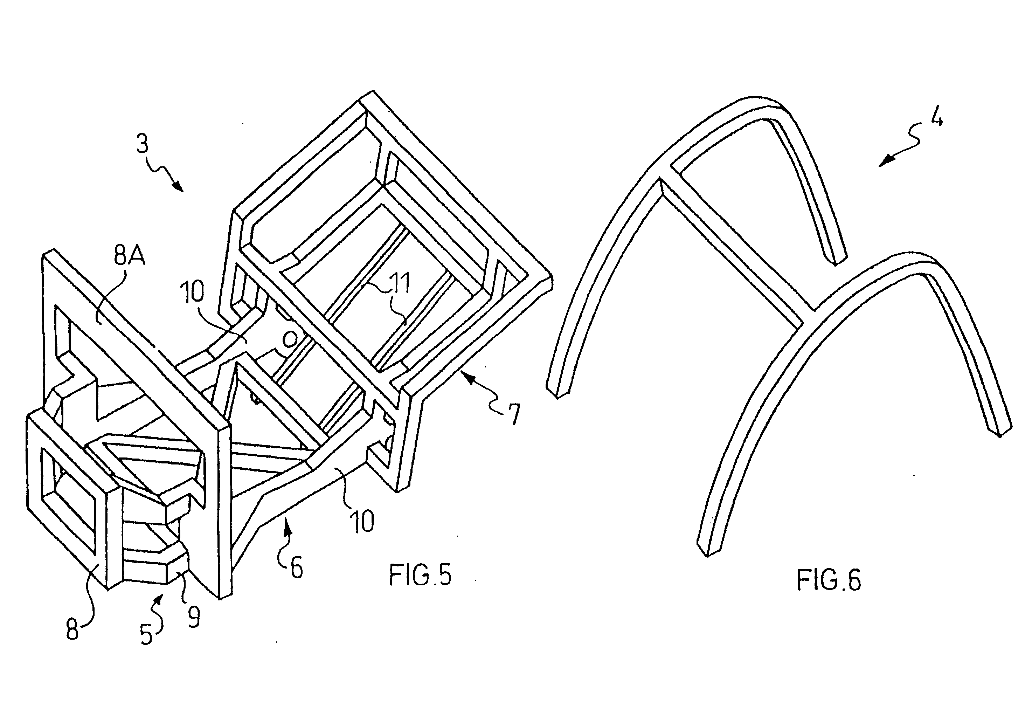

Figure 6 is a perspective view showing schematically an upper frame portion;
Figure 7 is a schematic sectional view from above of the city-car of Figure 1;
Figures 8 and 9 illustrate the movable seat feature of the city-car;
Figure 10 is a front view of an embodiment of a city-car seat;
Figure 11 is a sectional view of the inventive city-car bringing out certain passive safety members;
Figure 12 is a plan view of the embodiment shown in Figure 11;
Figure 13 is a sectional view of the inventive city-car showing fuel tank and engine compartments thereof;
Figure 14 is a plan view of Figure 13;
Figure 15 is a cross-section through the city-car of this invention, showing such details as battery, spare wheel and radiator compartments;
Figure 16 is a plan view of Figure 15.

### Modes for Carrying Out the Invention

Referring to the drawing views, shown at 1 is a four-wheel city-car according to the invention. This car 1 has a structural frame 2 which comprises essentially two parts: a lower frame 3 and an upper frame 4. The frame 2 is covered by a car body of sheet metal or a synthetic plastics material such as Kevlar. This car body is formed of shaped panels which are assembled detachably to the frame 2 and envelop the structural frame 2 shell-fashion.

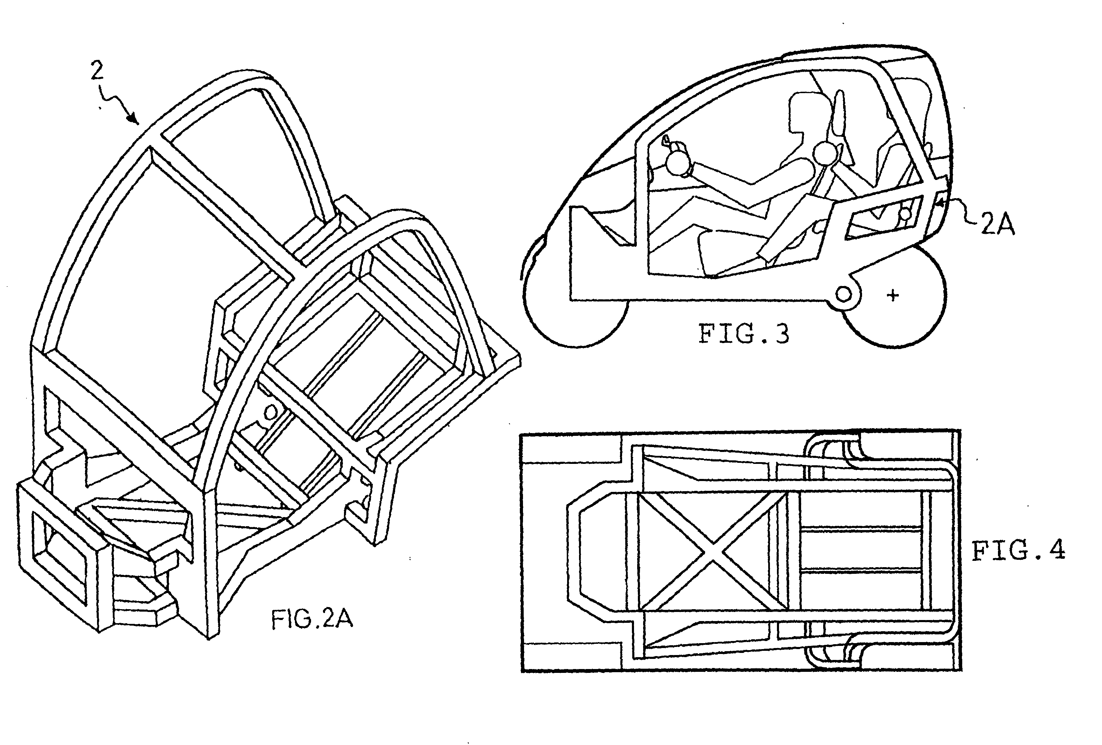

The upper frame 4 is secured rigidly on the lower frame 3, as shown in Figure 4. In this way, the entire construction of the structural frame 2 is made specially rigid and capable of accommodating a given amount of impact energy in a crash.

The lower frame 3 comprises a forward portion 5, a mid-portion 6, and a rearward portion 7. The forward portion 5 comprises a front element 8 and a front set 8A, both vertically upright and rectangular in shape. The front set 8A is larger than the front element 8, and the major side of the front set 8A represents the clearance width of the city-car 1.

The front element 8 is connected to the front set 8A by angular arms 9 which are welded to each corner edge of the front element 8. The presence of these angular arms 9 provides deformability for the forward portion 5 to absorb impact energy in a head-on collision. The front set 8A is also connected fixedly to the mid-portion 6. Thus, the city-car 1 is provided with a rigid inner structure which surrounds the interior compartment, and a deformable outer structure for cushioning possible shocks. The middle and rearward portions 6, 7 are joined by longitudinally extending side longitudinal members 10 which are designed and shaped to act as load-bearing members for the whole city-car 1. The rearward portion 7 also comprises a pair of rods 11 which connect one end of the rearward portion 7 to the mid-portion 6.

Advantageously, this rod pair 11 is inclined to an ideal horizontal plane substantially containing the city-car floor. In particular, the rods 11 extend from the mid-portion 6 toward the end of the portion 7 which locates at a level above said ideal horizontal plane.

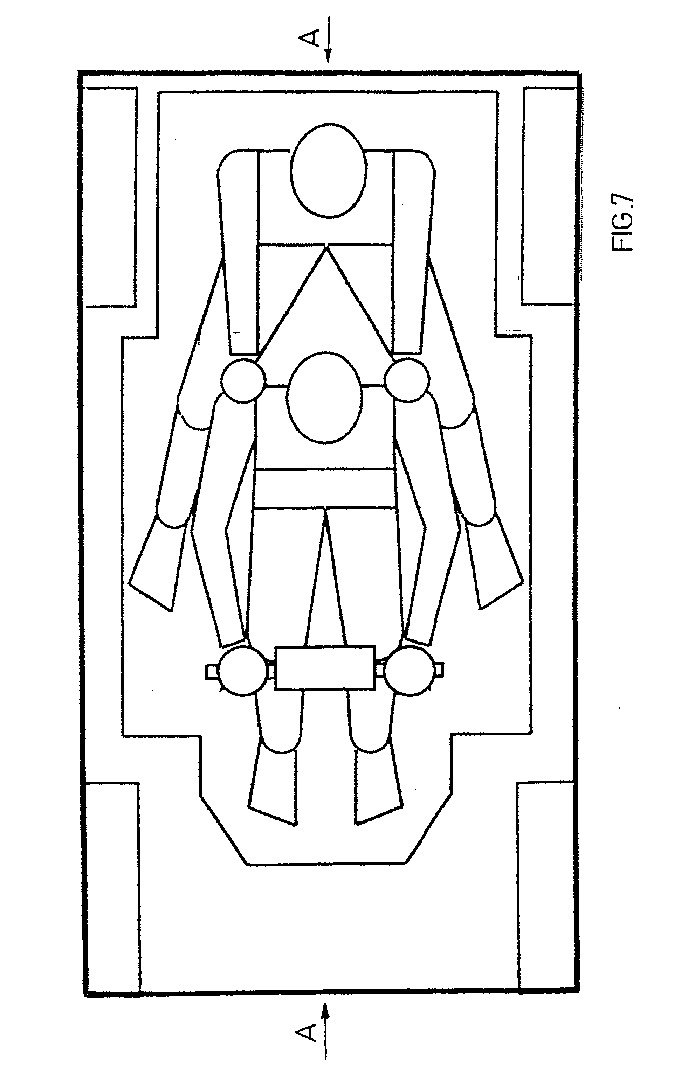

The car of this invention is equipped with two seats, a front seat 12 for the driver and a rear seat 13 for an optional passenger. These two seats 12, 13 are aligned to each other along a longitudinal axis, designated A-A in Figure 7. The rear seat 13 is positioned close against the front seat 12, such that the passenger is sitting astride said longitudinal axis A-A. Advantageously, the rear seat 13 locates at a higher level than the front seat 12.

Thus, the rear seat 13 is placed inside a cage or basket 2A comprised of the rearward portion of the structural frame 2, and the passenger is adequately protected. In particular, the design of the rear seat 13 is of motorbike inspiration, as clearly shown in the Figures, and the passenger will take a posture in the car 1 much like that of a passenger sat astride a motorbike saddle seat.

This feature is sure to meet the approval of motorcycling enthusiasts, who will enjoy travelling in this posture.

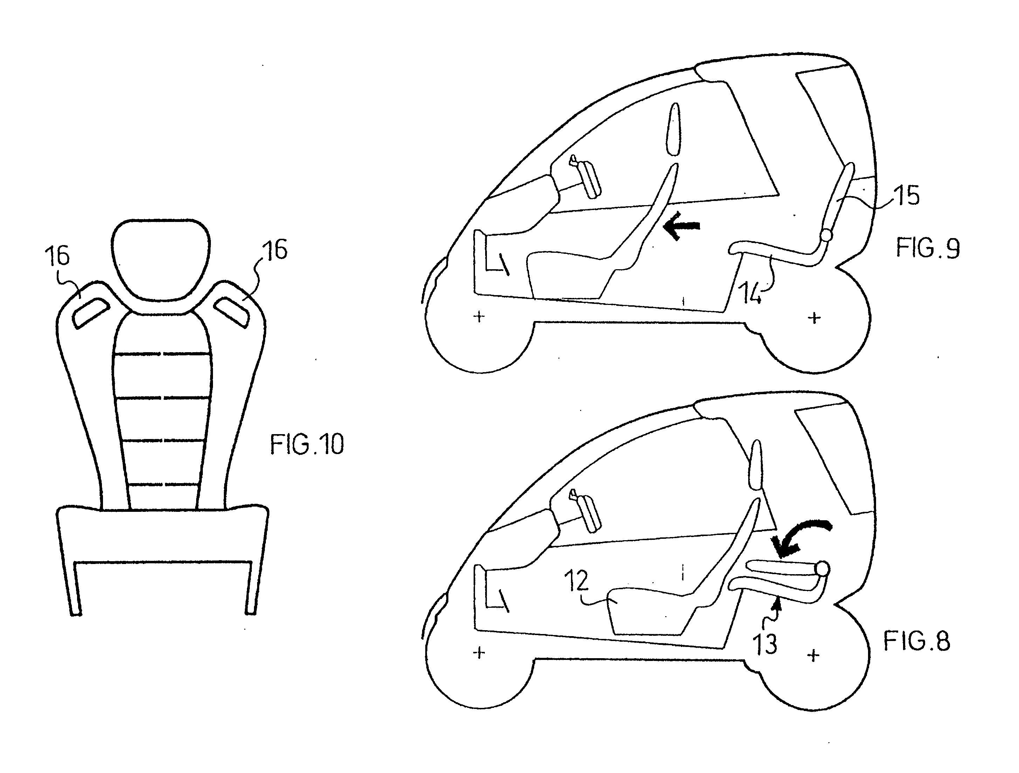

The rear seat 13 comprises basically a seat plate 14, whereto a backrest 15 is hingedly connected. As shown in Figure 8, when the seat 13 is not in use, the backrest 15 can be conveniently tilted down onto the seat plate 14 and used as a shelf.

Preferably, the front seat 12 is mounted on slideways, and can be slid along the longitudinal axis A-A for passenger's convenience in entering the city-car 1.

By displacing the front seat 12 on the slideways along the longitudinal axis A-A, the seat can be locked a selected distance apart from the rear seat 13 to provide comfortable legroom for the passenger.

A possible embodiment of the front seat 12, shown in Figure 10, is provided with a pair of oppositely located handles 16 formed in the top portion of its backrest for the passenger to hold on during the ride.

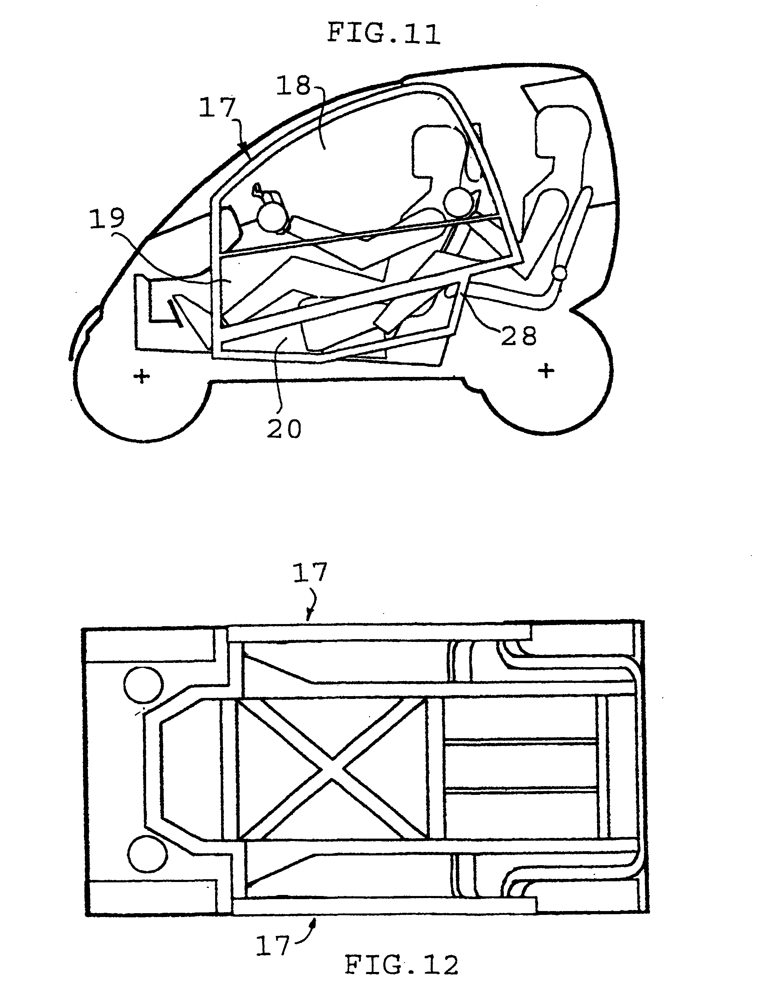

Shown in Figure 12 is a door 17 of the city-car 1 according to the invention. Advantageously, this door is hinged to the front set 8A. In particular, each door 17 incorporates a structural frame which is hinged to the structural frame 2 of the city-car 1 in a manner known per se.

The structural frame of each door 17 is strengthened by passive safety members, such as shockproof bars 28. In addition, each door 17 comprises a first panel portion 18 having a window removably closed by a clear material, such as glass, and a second panel portion 19 covered by a portion of the car body.

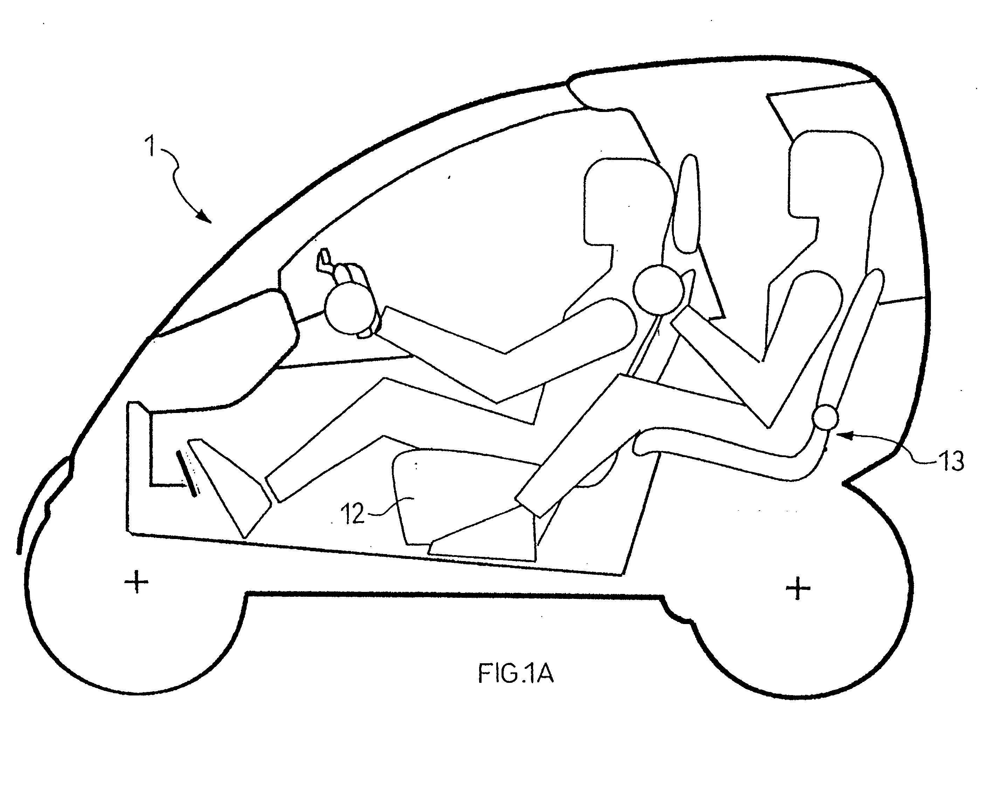

If desired, the doors 17 of the city-car 1 can be easily removed from their mounts, and the city-car 1 used as an open city-car, as shown in Figure 2.

Alternatively, the city-car 1 of this invention could be equipped with a single door, or with a rear door.

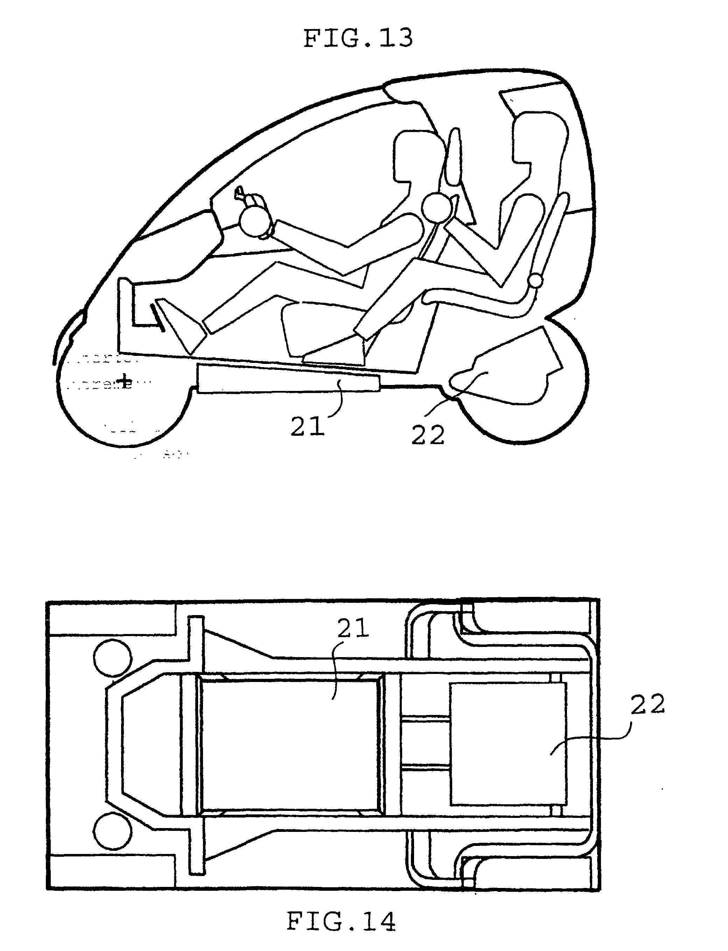

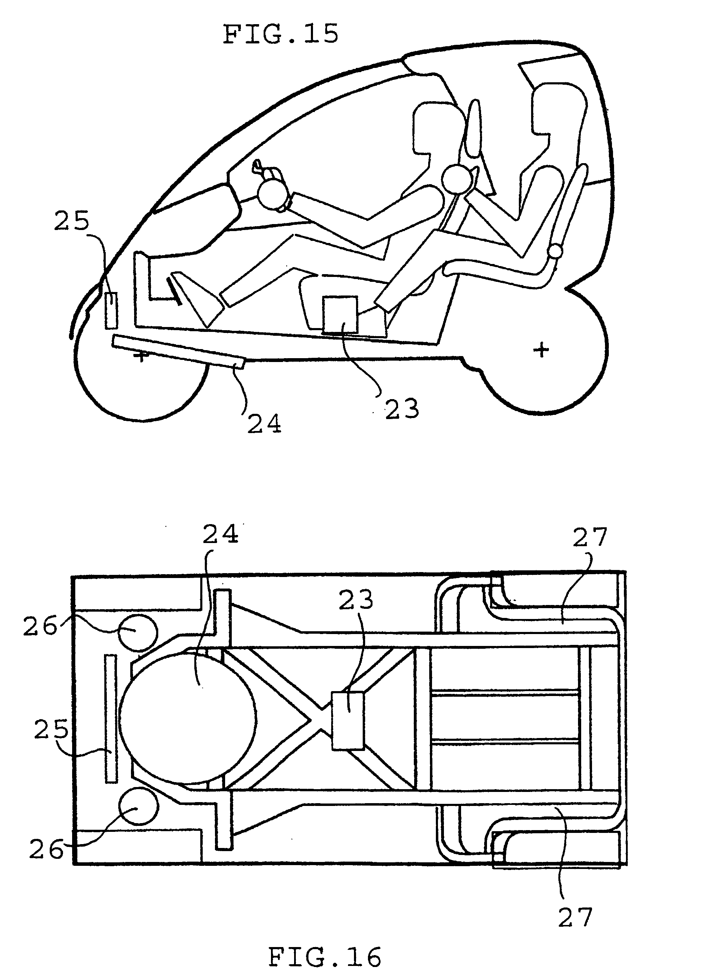

It should be further mentioned, to complete the description, that the city-car 1 is provided with a fuel tank 21 formed from a synthetic plastics material. This tank is advantageously of molded construction to a flattened wide shape adapted to fit in the mid-portion 6 of the lower frame, as shown in Figures 13 and 14.

An adequate propulsion and drive is envisaged for the city-car 1. For example, an engine /transmission unit 22 is mounted beneath the rod pair 11. In this way, on the occurrence of a rear bump, the engine unit 22 would slide under the frame 2 without injury to the car occupants.

In the preferred embodiment, given herein by way of non-limitative example, the drive is communicated to the rear wheels.

Advantageously, a storage battery 23 is stowed under the front seat 12, and a spare wheel 24 is stowed under the forward portion 5 of the lower frame 3. Radiators 25 are mounted out in front of said forward portion 5.

It will be appreciated from the foregoing description that the city-car of this invention does solve the technical problem, and achieves several advantages, among which the fact is outstanding that the lengthwise and crosswise dimensions of this city-car are far smaller than those provided by prior designs in this specific field.

Furthermore, the interior space afforded to the occupants of the city-car is adequate to allow the car to incorporate the latest passive safety features, such as airbags for the driver and the passenger, and lateral airbags. In essence, despite its small overall dimension, the small size car of this invention allows of a sufficient living and safety space between the driver, the passenger and the car body sidewalls for such passive safety members to display their full effectiveness. Modifications and changes may be made unto the city-car of this invention within the scope of the following claims.

## Claims

1. Four-wheel city-car (1) of small overall dimension, being of a type which comprises a rigid structural frame (2) covered by a car body and a front seat (12) and a rear seat (13) aligned to each other along a longitudinal vehicle axis (A-A), whereby the rear seat (13) is of motorbike style and placed close against the front seat (12), to accommodate a passenger astride said longitudinal axis, and whereby said rear seat (13) is located at a higher level than the front seat (12), **characterized in that** an engine unit (22) is housed under said rear seat (13), said rear seat (13) being placed inside a protective cage- or basket-like construction (2A) comprised of a rear portion of said rigid structural frame (2), said engine unit (22) being mounted under said protective cage-or basket-like construction (2A) in such a way, on the occurrence of a rear bump, to allow said engine unit (22) to slide under said rigid structural frame (2).

2. A city-car according to Claim 1, **characterized in that** the rigid structural frame (2) comprises an upper frame (4) mounted fixedly on a lower frame (3).

3. A city-car according to any of the preceding claims, **characterized in that** the rear seat (13) comprises a seat plate (14) and a backrest (15) hinged to one end of the seat plate (14).

4. A city-car according to any of the preceding claims, **characterized in that** it comprises at least one door (17).

5. A city-car according to Claim 2, **characterized in that** said lower frame (3) comprises a forward portion (5), a middle portion (6) and a rearward portion (7), the forward portion including a front element (8) and a front set (8A), both vertically upright, the front element (8) being connected by the front set (8A) by deformable angular arms (9).

6. A city-car according to Claim 1, **characterized in that** it comprises two doors (17).

7. A city-car according to Claims 5 and 6, **characterized in that** said two doors (17) are respectively hinged to opposite sides of said front set (8A).

8. A city-car according to Claims 4 and 5, **characterized in that** said at least one door (17) is hinged to the front set (8A).

9. A city-car according to Claim 5, **characterized in that** said rearward portion (7) comprises a pair of rods (11) interconnecting one of its ends and the middle portion (6) of the frame (2), this rod pair (11) lying at an angle of inclination to an ideal horizontal plane containing the city-car floor.

10. A city-car according to Claim 9, **characterized in that** said engine unit (22) is mounted slidably beneath said rod pair (11), for sliding under the structural frame (2) under a collision impact.

11. A city-car according to any of the preceding claims, **characterized in that** it comprises a fuel tank (21) having a wide flattened shape.

12. A city-car according to Claim 11, **characterized in that** said fuel tank (21) is received within the middle portion (6) of the structural frame (2).

13. A city-car according to Claim 5, **characterized in that** said at least one door (17) comprises passive safety members.

14. A city-car according to Claim 13, **characterized in that** said passive safety members comprise at least one shockproof bar.

15. A city-car according to Claim 13, **characterized in that** said passive safety members comprise at least one lateral airbag.

## Patentansprüche

1. Vierrad-Stadtauto (1) mit kleinen Gesamtabmessungen von einer Bauart, die einen starren Konstruktionsrahmen (2) umfasst, der von einer Fahrzeugkarosserie sowie einem Vordersitz (12) und einem Rücksitz (13) abgedeckt ist, die zueinander entlang einer Fahrzeug-Längsachse (A-A) ausgerichtet sind, wobei der Rücksitz (13) nach Art eines Motorrads gestaltet ist und nahe an dem Vordersitz (12) angeordnet ist, um einen Passagier rittlings bezüglich der Längsachse aufzunehmen, und wobei der Rücksitz (13) höher als der Vordersitz (12) angeordnet ist, **dadurch gekennzeichnet, dass** eine Motoreinheit (22) unter dem Rücksitz (13) untergebracht ist, wobei sich der Rücksitz (13) in einem schützenden käfig- oder korbartigen Aufbau (2A) befindet, der den rückwärtigen Teil des starren Konstruktionsrahmens (2) bildet, wobei die Motoreinheit (22) unter dem schützenden käfig- oder korbartigen Aufbau (2A) in einer solchen Weise angebracht ist, dass es der Motoreinheit (22) beim Auftreten eines Auffahrens auf das Heck ermöglicht wird, unter den starren Konstruktionsrahmen (2) zu rutschen.

2. Stadtauto nach Anspruch 1, **dadurch gekennzeichnet, dass** der starre Konstruktionsrahmen (2) einen oberen Rahmen (4) umfasst, der fest an einem unteren Rahmen (3) angebracht ist.

3. Stadtauto nach einem der vorhergehenden Ansprüche, **dadurch gekennzeichnet, dass** der Rücksitz (13) eine Sitzfläche (14) und eine Rückenlehne (15), die mit einem Ende der Sitzfläche (14) gelenkig befestigt ist, umfasst.

4. Stadtauto nach einem der vorhergehenden Ansprüche, **dadurch gekennzeichnet, dass** es mindestens eine Tür (17) umfasst.

5. Stadtauto nach Anspruch 2, **dadurch gekennzeichnet, dass** der untere Rahmen (3) einen vorderen Teil (5), einen mittleren Teil (6) und einen hinteren Teil (7) umfasst, wobei der vordere Teil ein Stirnseitenelement (8) und einen Vorderaufbau (8A) umfasst, die beide senkrecht aufgestellt sind, wobei das Stirnseitenelement (8) mit dem Vorderaufbau (8A) mittels deformierbarer Winkelarme (9) verbunden ist.

6. Stadtauto nach Anspruch 1, **dadurch gekennzeichnet, dass** es zwei Türen (17) umfasst.

7. Stadtauto nach den Ansprüchen 5 und 6, **dadurch gekennzeichnet, dass** die beiden Türen (17) jeweils an gegenüberliegenden Seiten des Vorderaufbaus (8A) gelenkig befestigt sind.

8. Stadtauto nach den Ansprüchen 4 und 5, **dadurch gekennzeichnet, dass** mindestens eine Tür (17) an dem Vorderaufbau (8A) gelenkig befestigt ist.

9. Stadtauto nach Anspruch 5, **dadurch gekennzeichnet, dass** der hintere Teil (7) ein Paar Stangen (11) umfasst, die eines seiner Enden mit dem mittleren Teil (6) des Rahmens (2) verbinden, wobei dieses Stangenpaar (11) bezüglich einer idealen horizontalen Ebene, die den Boden des Stadtautos bildet, mit einem Neigungswinkel angeordnet ist.

10. Stadtauto nach Anspruch 9, **dadurch gekennzeichnet, dass** die Motoreinheit (22) verschiebbar unter dem Stangenpaar (11) angebracht ist, um bei einem Stoß infolge eines Aufpralls unter den Konstruktionsrahmen (2) zu gleiten.

11. Stadtauto nach einem der vorhergehenden Ansprüche, **dadurch gekennzeichnet, dass** es einen Kraftstofftank (21) mit einer breiten abgeflachten Form umfasst.

12. Stadtauto nach Anspruch 11, **dadurch gekennzeichnet, dass** der Kraftstofftank (21) in dem mittleren Teil (6) des Konstruktionsrahmens (2) aufgenommen ist.

13. Stadtauto nach Anspruch 5, **dadurch gekennzeichnet, dass** mindestens eine Tür (17) passive Sicherheitselemente umfasst.

14. Stadtauto nach Anspruch 13, **dadurch gekennzeichnet, dass** die passiven Sicherheitselemente mindestens eine stoßfeste Stange umfassen.

15. Stadtauto nach Anspruch 13, **dadurch gekennzeichnet, dass** die passiven Sicherheitselemente mindestens einen Seitenairbag umfassen.

## Revendications

1. Voiture urbaine (1) de faible encombrement, du type qui comprend un châssis structurel rigide (2) recouvert d'une carrosserie, un siège avant (12) et un siège arrière (13) alignés l'un par rapport à l'autre, le long de l'axe longitudinal du véhicule (A-A), dans laquelle le siège arrière (13) est du style motocyclette et est placé très près du siège avant(12), afin d'accueillir un passager à califourchon sur ledit axe longitudinal, et dans laquelle ledit siège arrière. (13) est situé à un niveau plus élevé que le siège avant (12), **caractérisée en ce qu'**un moteur (22) est logé sous ledit siège arrière (13), ledit siège arrière (13) étant placé à l'intérieur d'un coffret semblable à un panier ou à une cage de protection (2A), constitué d'une partie arrière dudit châssis structurel rigide (2), ledit moteur (22) étant monté sous ledit coffret semblable à un panier ou à une cage de protection (2A) de telle manière que, dans le cas d'un choc arrière, le moteur (22) puisse glisser sous ledit châssis structurel rigide (2).

2. Voiture urbaine selon la revendication 1, **caractérisée en ce que** le châssis structurel rigide (2) comprend un châssis supérieur (4) monté de manière fixe sur un châssis inférieur (3).

3. Voiture urbaine selon l'une quelconque des revendications précédentes, **caractérisée en ce que** le siège arrière (13) comprend un fond de siège (14) et un dossier (15) fixé par charnière à une extrémité du fond de siège (14).

4. Voiture urbaine selon l'une quelconque des revendications précédentes, **caractérisée en ce qu'**elle comprend au moins une portière (17).

5. Voiture urbaine selon la revendication 2, **caractérisée en ce que** ledit châssis inférieur (3) comprend une partie avant (5), une partie médiane (6) et une partie arrière (7), la partie avant comportant un élément avant (8) et un ensemble avant (8A), les deux étant verticaux, l'élément avant (8) étant raccordé à l'ensemble avant (8A) grâce à des bras angulaires déformables (9).

6. Voiture urbaine selon la revendication 1, **caractérisée en ce qu'**elle comprend deux portières (17).

7. Voiture urbaine selon les revendications 5 et 6, **caractérisée en ce que** lesdites deux portières (17) sont respectivement fixées par charnière sur les côtés opposés dudit ensemble avant (8A).

8. Voiture urbaine selon les revendications 4 et 5, **caractérisée en ce que** ladite au moins une portière (17) est fixée par charnière à l'ensemble avant (8A).

9. Voiture urbaine selon la revendication 5, **caractérisée en ce que** ladite partie arrière (7) comprend une paire de tiges (11) reliées à l'une de ses extrémités et à la partie médiane (6) du châssis (2), cette paire de tiges (11) étant placées suivant un angle d'inclinaison par rapport à un plan horizontal idéal contenant le plancher de la voiture urbaine.

10. Voiture urbaine selon la revendication 9, **caractérisée en ce que** ledit moteur (22) est monté pour glisser sous ladite paire de tiges (11), afin de glisser sous le châssis structurel (2), dans le cas d'un impact dû à une collision.

11. Voiture urbaine selon l'une quelconque des revendications précédentes, **caractérisée en ce qu'**elle comprend un réservoir de carburant (21) ayant une forme large et aplatie.

12. Voiture urbaine selon la revendication 11, **caractérisée en ce que** ledit réservoir de carburant (21) est reçu à l'intérieur de la partie médiane (6) du châssis structurel (2).

13. Voiture urbaine selon la revendication 5, **caractérisée en ce que** au moins une portière (17) comprend des éléments de sécurité passive.

14. Voiture urbaine selon la revendication 13, **caractérisée en ce que** lesdits éléments de sécurité passive comprennent au moins une barre antichocs.

15. Voiture urbaine selon la revendication 13, **caractérisée en ce que** lesdits éléments de sécurité passive comprennent au moins un coussin gonflable latéral de sécurité.
